# EUROPEAN PATENT APPLICATION

(11) **EP 2 703 918 A1**
(43) Date of publication of application: **05.03.2014**
(21) Application number: 12182884.2
(22) Date of filing: 04.09.2012
(51) Int. Cl.: G05B 19/042, G06F 9/50

(54) **Configuration of control applications on multi-host controllers**

(71) Applicant: ABB Research Ltd., 8050 Zürich (CH)
(72) Inventor: Wahler, Michael, CH-5400 Baden (CH); Kumar, Atul, 560048 Bangalore (IN); Ghosh, Sanjay, 560016 Bangalore (IN); Richter, Stefan, 5442 Fislisbach (CH)
(74) Representative: ABB Patent Attorneys

(57) **Abstract**

The present invention is concerned with configuring and executing control applications 1, in particular in an Industrial Automation and Control System IACS. Specifically, the invention relates to a method of optimizing execution of said control applications 1 and an optimization module including a plurality of hosts 2. According to the invention, a control application 1 in an Industrial Automation and Control System IACS e.g. controlling an industrial primary process is optimized, wherein optimization includes appropriately configuring and deploying said application 1. However, the control application 1 comprises a plurality of components 3. These components 3 may be interrelated, where these may be anyhow executed at least partially in parallel. Eventually, the components 3 are assigned individually for execution to an execution host 10, 11, 12, 13in a preset execution order depending on specific constraints, such as a relative component execution timing 14.

## Description

### FIELD OF THE INVENTION

The invention relates to the field of configuring and executing control applications, in particular in an Industrial Automation and Control System IACS. Specifically, the invention relates to a method of optimizing execution of said control applications and an optimization module including a plurality of execution hosts.

### BACKGROUND OF THE INVENTION

The requirements for control applications to work in real-time are critical to running and controlling systems, particularly, for Industrial Automation and Control Systems. These control applications are constantly becoming more and more complex and extensive as the systems to be controlled are expanding in complexity and size. In the past this could be compensated by using faster processors to execute said control applications. However, available processors may not be as fast as necessary to provide a real-time execution. Thus, other methods need to be used in order to be able to run and control Industrial Automation and Control Systems in real-time.

It is known in the art to deploy multi-core processors for increasing processing speed, wherein the single processor comprises two or more independent central processing units. The processing units then execute computation tasks simultaneously, thus in principle providing a much higher execution rate than a single-core processor. Ultimately, multi-core processing may realize a speedup factor near the number of cores used. That is if the problem is split up enough to fit within each core cache, thus avoiding use of much slower main system memory.

However, the actual performance of such a multi-core processor or a processing unit comprising multiple processors depends heavily on how an execution task may be split up and distributed across the multiple cores available. Additionally, communication between the cores for a given task may slow down processing. In addition, possible gains are limited by the fraction of the task that can be run simultaneously on multiple cores.

Execution of most applications, however, is not accelerated much unless further steps are taken towards adequate distribution of the execution task.

### DESCRIPTION OF THE INVENTION

It is therefore an objective of the invention to optimize the execution of a control application in an Industrial Automation and Control System IACS including a plurality of execution hosts. This objective is achieved by a method of optimizing or configuring a control application and an optimization module or tool according to the independent claims. Preferred embodiments are evident from the dependent claims, wherein the claim dependency shall not be construed as excluding further meaningful claim combinations.

According to the invention, a control application in or of an Industrial Automation and Control System IACS e.g. controlling an industrial primary process, is optimized by appropriately configuring and deploying said application to the IACS. The system includes a plurality of execution hosts such as CPU-cores of single- or multi-core CPUs, and the control application comprises a plurality of components or sub-applications. These components may be interrelated and executed at least partially in parallel. Eventually, the components may be assigned individually for execution to an execution host in a preset execution order depending on specific constraints, such as relative component execution timing.

The execution host exhibits an intra-host communication delay for communication between components executing sequentially on a same host. As for further execution the results of earlier executed components may be needed, thus, communication, e.g. between cores of a multi-core processor, and storing of execution results delays execution.

In addition, the execution hosts exhibit an inter-host communication delay for communication between executing components on different hosts. For execution of a sequence of components on different hosts these may need to communicate certain results of earlier executions to proceed further. This leads to a communication delay depending on several parameters, e.g. connection type and speed between different hosts.

Each component of the control application is assigned to an execution host primarily considering component memory requirements and respective available host memory. Subsequently, an execution schedule for all components is established considering execution order constraints, e.g. components depending on each other need to be executed one after another depending on their interrelation. Eventually, an application execution time may be calculated based on the execution schedule considering individual component execution times as well as intra- and inter-host communication delays of any inter-component communication according to schedule.

In a preferred variant of the invention, the IACS includes three or more distinct execution hosts with a first inter-host communication delay for communication between executing components sequentially on a first and a third of the three different hosts. Additionally, the system comprises a second inter-host communication delay for communication between components executing on a second and the third of the three different hosts. However, in this variant no triple-core-on-single-CPU architecture is to be deployed. Thus, the system requires inter-board or even inter-device communication, e.g. facilitated by network proxies.

In an advantageous embodiment of the invention, steps a) to c) according to the independent claims are repeated for one or more different assignments of the components to the hosts and corresponding execution schedules. Additionally, by using a constraint solver or a similar tool the optimal execution schedule and corresponding assignments of components to the respective hosts are determined, such that application execution time is minimized or matches a predetermined execution cycle time. The application then may be cyclically executed accordingly.

In a further preferred variant of the invention, the execution schedule is selected with a minimum inter-host communication. Thus, resulting in a minimum delay caused by the additional communication between hosts assigned executing components. A further variant of the invention includes selecting the execution schedule with a minimum number of distinct hosts required to execute the control application. In this variant, the execution is optimized by avoiding inter- and intra-host communication as far as possible.

In a further preferred embodiment of the invention, two or more control applications in or of the Industrial Automation and Control System IACS, e.g. controlling distinct non-related aspects of the industrial primary process, are configured on the plurality of execution hosts. In this embodiment steps a) to c) according to the independent claims are repeated for one or more different assignments of the components to the hosts and corresponding execution schedule. The execution schedule is selected subsequently with the minimal total execution time of the two applications.

In a further embodiment, for each host assigned to one or more components an application cycle execution computation load, i.e. a total load within one execution cycle, is determined. The execution schedule is selected with a minimum execution load difference between any two hosts.

The present invention also relates to an optimization module, tool or program for an Industrial Automation and Control System IACS including a plurality of execution hosts for executing a control application comprising a plurality of components individually executable on assigned execution hosts subject to execution order constraints, wherein the execution hosts present an intra-host communication delay for communication between components executing on a same host as well as an inter-host communication delay for communication between components executing on different hosts, the optimization module being configured to assign each component of the control application to an execution host, establish an execution schedule, and calculate an application execution time based on the execution schedule and under consideration of component execution times as well as intra- and inter-host communication delays.

### BRIEF DESCRIPTION OF THE DRAWINGS

The subject matter of the invention will be explained in more detail in the following text with reference to preferred exemplary embodiments which are illustrated in the attached drawings, in which:
Fig. 1 schematically shows an assignment of components to hosts and respective execution; and
Fig.2 shows a dependency of components

The reference symbols used in the drawings, and their meanings, are listed in summary form in the list of designations. In principle, identical parts are provided with the same reference symbols in the figures.

### DETAILED DESCRIPTION OF PREFERRED EMBODIMENTS

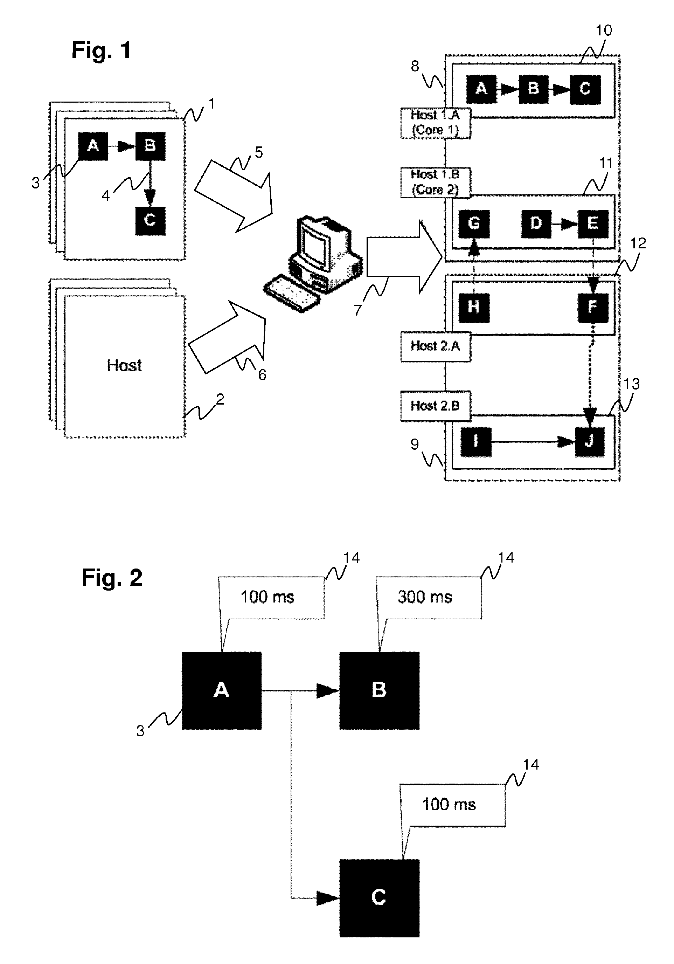

Fig.1 shows a scheme to execute a control application 1 on a specific host 2. The control application 1 is divided in components 3, i.e. components A to J, where some components may need to be executed sequentially in a specific order, such as component A needs to be executed before B and B before C. This may be due to the need of results of component A to execute component B and so on. This dependence is indicated in figure 1 by arrows 4 between respective components 3.

Specific requirements of the control application 1 and the components 3 such as memory requirements are used in conjunction with the available specifications such as memory availability of the hosts 2 as input data 5, 6 for generation of output data 7 such as assigned processing units 8, 9 for each component 3, an execution schedule, and an application execution time. The processing units 8, 9 may be comprised of several execution hosts 10, 11, 12, 13, where components 3 may also be assigned to specific hosts 10, 11, 12, 13 of the processing units 8, 9.

Components 3 assigned to the same execution host of some physical processing unit 8, 9 may communicate with each other via shared memory. Communication between two components 3 may be established by assigned same memory area. A sender component 3 writes data to a memory block, and the receiver component reads data from the same memory block. Synchronization is provided through the execution schedule which ensures that no "read" is performed before the corresponding "write" has been performed, i.e. the components 3 are executed in correct order.

The execution schedule depicted in figure 1 is for illustration, where one skilled in the art will understand that for different control applications 1, other execution host architecture as well as changing other parameters may lead to changes in the established execution schedule.

Components 3 of the control application 1 may be carried out simultaneously. This may be on different hosts 10, 11; 12, 13 of a same processing unit 8; 9, e. g. the components D and E may be executed subsequently but in parallel to the execution of components A, B, and C. The execution schedule may further determine a component G to be executed on a host 11 of a processing unit 8 without any relation to further components executed on the same host 11, specifically before components D and E and in parallel to components A, B, and C. Furthermore, the execution of component J depends on components F and I, where I is executed on the same host 13 but component F is executed on the other host 12 of the processing unit 9.

Thus, intra-host communication, e.g. via shared memory, is needed to execute all components 3 according to the execution schedule. Shared memory is the fastest inter-component communication mechanism however it can only be used for communication between components running on the same host 10, 11, 12, 13. Shared memory communication has the highest bandwidth, lowest latency, and lowest processor utilization. In addition, messaging queuing may be used for inter-host communication between components on the same processing unit 8, 9, but running on different cores 10, 11, 12, 13.

According to the depicted execution schedule components may be executed on a different processing unit 8, 9 due to specific safety rules for execution. The component H for instance is to be executed on core 12 of the processing unit 9. However, component H is to be executed in correlation with G and its result is needed as input for the execution of component G on the host 11 of the prosecution unit 8. In the same manner the execution of component F depends on the execution of the component E. Thus, inter-host communication, e.g. via network proxies, is needed to execute all components 3 according to the execution schedule. However, network proxies are relatively slow compared to communication available on a single processing unit 8, 9.

The execution schedule may be optimized according execution time such as the shortest execution time or matching a predetermined execution cycle, wherein the execution schedule is repeated continuously. Further optimization may be carried out according to minimize inter-host communication or to minimize a number of distinct hosts required to execute the control application.

Figure 2 shows components 3 of control application 1 and their interrelation. In this example component A needs to be executed before components B and C as its output is needed for execution of said components 3.

In addition figure 2 shows the execution time of each component A, B, and C. The component execution time 14 of component A is 100ms, of component B 300ms, and of component C 100ms. Accordingly the maximum execution time on a host 10, 11, 12, 13 for a specific application 1 is 502ms, involving an intra-host communication delay of 1ms, e.g. via shared memory. Thus, the execution on one single host 10, 11, 12, 13 of the components A, B, and C may exceed a typical cycle length of 500ms by 2ms due to the intra-host communication after execution of component A and communicating its result to execute component B and C respectively. Therefore, the execution on one single host 10, 11, 12, 13 is not possible and the execution needs to be distributed. Thus, an execution schedule is to be established, e.g. depicted in figure 1.

### LIST OF DESIGNATIONS

- 1: Control Application
- 2: Set of Hosts
- 3: Component
- 4: Communication channels
- 5: Input data
- 6: Input data
- 7: Output
- 8: Processing unit
- 9: Processing unit
- 10: Host
- 11: Host
- 12: Host
- 13: Host
- 14: Component execution time

## Claims

1. A method of optimizing a control application (1) in an Industrial Automation and Control System IACS including a plurality of hosts (2), wherein the control application (1) comprises a plurality of components (3) individually executable on assigned execution hosts (10, 11, 12, 13) subject to execution order constraints, and wherein the execution hosts (10, 11, 12, 13) exhibit an intra-host communication delay for communication between components (3) executed on a same host as well as an inter-host communication delay for communication between components executed on different execution hosts (10, 11, 12, 13), the method comprising:
a) assigning each component (3) of the control application to an execution host (10, 11, 12, 13),
b) establishing an execution schedule, and
c) calculating an application execution time based on the execution schedule and under consideration of component execution times (14) as well as intra- and inter-host communication delays.

2. The method of claim 1, wherein the IACS includes three distinct execution hosts (10, 11, 12, 13) with a first inter-host communication delay for communication between components (3) executed on a first and a third of the three different hosts (10, 11, 12, 13), and with a second inter-host communication delay for communication between components (3) executed on a second and the third of the three different hosts (10, 11, 12, 13).

3. The method of claim 1 or 2, comprising repeating steps a) to c) for a different assignment of the components (3) to the hosts (2) and corresponding execution schedules, selecting the execution schedule with the optimal application execution time.

4. The method of claim 3, comprising selecting the execution schedule with minimum inter-host communication.

5. The method of claim 3, comprising selecting the execution schedule with minimum number of distinct hosts required to execute the control application (1).

6. The method of claim 3, wherein two control applications (1) in the Industrial Automation and Control System IACS are configured on the plurality of execution hosts (10, 11, 12, 13), comprising repeating steps a) to c) for a different assignment of the components (3) to the hosts (2) and corresponding execution schedule, selecting the execution schedule with the minimal total execution time of the two applications (1).

7. The method of claim 3, comprising determining, for each host (2) that is assigned one or more components (3) an application cycle execution load, and selecting the execution schedule with minimum execution load difference between any two hosts (2).

8. An optimization module for an Industrial Automation and Control System IACS including a plurality of hosts (2) for executing a control application (1) comprising a plurality of components (3) individually executable on assigned execution hosts (10, 11, 12, 13) subject to execution order constraints, wherein the execution hosts (10, 11, 12, 13) present an intra-host communication delay for communication between components executed on a same execution host (10, 11, 12, 13) as well as an inter-host communication delay for communication between components (3) executed on different hosts, the optimization module being configured to:
a) assign each component (3) of the control application (1) to an execution host (10, 11, 12, 13),
b) establish an execution schedule, and
c) calculate an application execution time based on the execution schedule and under consideration of component execution times (14) as well as intra- and inter-host communication delays.
